(19) Europäisches Patentamt
European Patent Office
Office européen des brevets

(11) Publication number: **0 090 114**
**A2**

# (12) EUROPEAN PATENT APPLICATION

(21) Application number: **82305999.3**

(22) Date of filing: **11.11.82**

(51) Int. Cl.³: **C 09 B 62/028**, C 09 B 62/51

(30) Priority: **26.03.82 GB 8208884**

(43) Date of publication of application: **05.10.83**
**Bulletin 83/40**

(84) Designated Contracting States: **BE CH DE FR GB IT LI**

(71) Applicant: **IMPERIAL CHEMICAL INDUSTRIES PLC, Imperial Chemical House Millbank, London SW1P 3JF (GB)**

(72) Inventor: **Crabtree, Allen, "Craigside", The Hollins, Todmorden Lancashire OL14 8BJ (GB)**

(74) Representative: **Marklow, Raymond Joseph et al, Imperial Chemical Industries PLC Legal Department: Patents Thames House North Millbank, London SW1P 4QG (GB)**

(54) **Reactive dyes.**

(57) Reactive dyes which in the free acid form are of the formula:

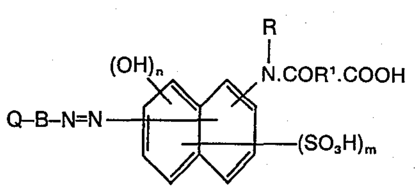

wherein Q is a cellulose reactive group attached to a carbon atom of B and selected from $HO_3SO.CH_2CH_2.SO_2$, $CH_2=CH.SO_2$, and $NR^2Q^1$ where $Q^1$ is halotriazinyl, halopyrimidinyl, 2,3-dichloro-quinoxaline-5- or 6-sulphonyl, or 2,3-dichloroquinoxaline-5- or 6-carbonyl;

R and $R^2$ are each independently H or $C_{1-4}$ alkyl;

B is a radical containing a benzene or naphthalene nucleus which is linked directly to the azo group;

$R^1$ is the radical of a cyclic dicarboxylic anhydride

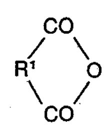

n is 0 or 1; and m is 1 or 2,

providing that when B is of the benzene series and $R^1$ is $CH_2CH_2$, Q is not $CH_2=CHSO_2$ or $HO_3SO.CH_2CH_2SO_2$.

Dyestuffs are characterised by good dyeing and discharge properties.

EP 0 090 114 A2

REACTIVE DYES

This invention relates to reactive dyes, in particular reactive dyes having a carboxyacylamino group.

It is now well established to have dyes with substituents which can react with active hydrogen substrates e.g. cellulose thereby linking the dye to the substrate with a covalent link. This enables coloured substrates such as textile fibres to be obtained with a high degree of fastness to washing. Many so called "reactive" dyes are available for linking to substrates. However few of these dyes combine a good level of colouring power with "dischargeability", which is the property of being susceptable to conversion to colourless compounds. This property is exploited in discharge printing where coloured fabric is over printed with a discharge paste usually containing a reducing agent. The result is an uncoloured pattern on a coloured background providing the fabric was coloured with a dye having good dischargeability.

The presence of acylamino groups in reactive dyestuffs is well known e.g. acetylamino dyes are shown in UK 851537 and Japanese Patent 7128903 discloses dyes of the structure

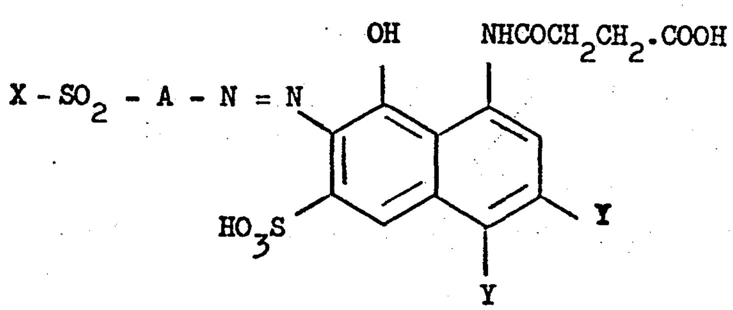

where X is vinyl or beta-sulphatoethyl; A is optionally substituted benzene nucleus and one Y is H and the other $SO_3H$.

We have now discovered a class of reative dyes with good dyeing and dischargeability properties characterised by having a carboxyacylamino substituent.

According to the present invention there is provided reactive dyes which in the free acid form are of the formula:

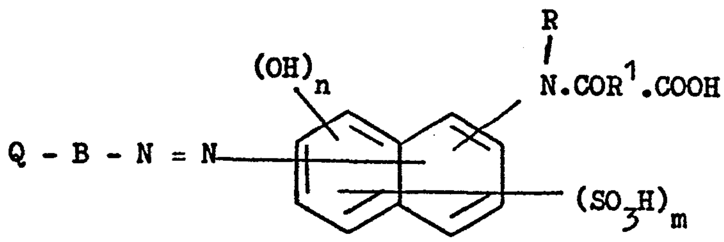

(1)

wherein Q is a cellulose reactive group attached to a carbon atom of B and selected from $HO_3SO.CH_2CH_2.SO_2$, $CH_2=CH.SO_2$, and $NR^2Q^1$ where $Q^1$ is halotriazinyl, halopyrimidinyl, 2,3-dichloroquinoxaline-5- or 6- sulphonyl, or 2,3-dichloroquinoxaline-5- or 6-carbonyl;

R and $R^2$ are each independently H or $C_{1-4}$ alkyl;

B is a radical containing a benzene or naphthalene nucleus which is linked directly to the azo group;

$R^1$ is the radical of a cyclic dicarboxylic anhydride

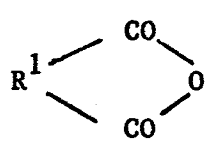

n is 0 or 1;

and m is 1 or 2,

providing that when B is of the benzene series and $R^1$ is $CH_2CH_2$, Q is not $CH_2=CHSO_2$ or $HO_3SO.CH_2CH_2SO_2$.

The group Q may be attached to a carbon atom of the benzene or naphthalene nucleus of radical B which is linked directly to the azo group or Q may be attached to another group which is itself linked to this benzene or naphthalene nucleus of radical B. These nuclei may carry additional substituents such as $SO_3H$, $C_{1-4}$ alkyl, $C_{1-4}$ alkoxy or halogen.

As examples of B in which Q is linked directly to the benzene or naphthalene nucleus there may be mentioned 1,2-, 1,3- and 1,4-phenylene, 5-sulpho-1,3-phenylene, 2,5-disulpho-1,4-phenylene, 5-methyl-1,3-phenylene, 4-methoxyl-1,3-phenylene, 2,5-dimethoxy-1,4-phenylene.

As examples of B in which Q is linked to a group attached to the benzene or naphthalene nucleus carry the azo group there may be mentioned groups of the formulae:

/ -

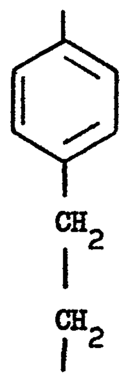

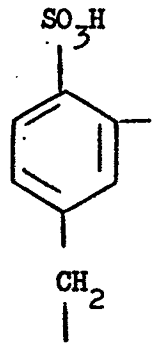

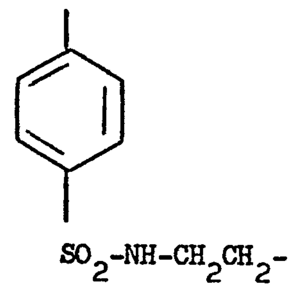

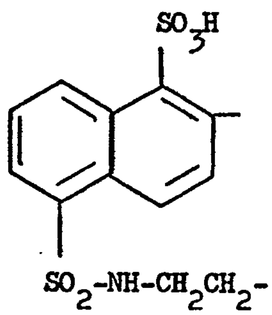

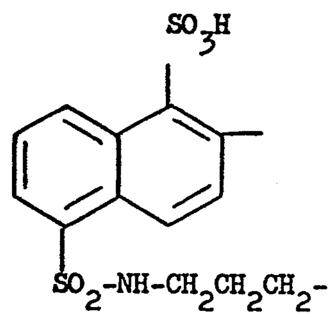

and

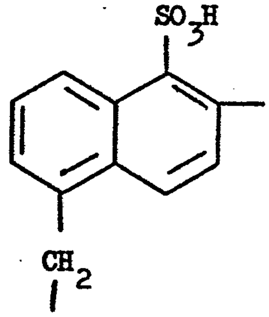

As examples of R and $R^2$ when $C_{1-4}$ alkyl there may be mentioned methyl, ethyl, n-propyl and n-butyl.

The halopyrimidinyl groups represented by $Q^1$ are usually pyrimidin-2-yl or -4-yl groups having a halogen atom especially Cl or F in at least one of the remaining 2, 4 and 6-positions. The 5- position may carry various substituents such as Cl or CN which are not normally cellulose-reactive in themselves but may enhance the reactivity of substituents in other positions of the pyrimidine ring. As specific examples of such pyrimidinyl groups there may be mentioned:

2,6-dichloropyrimidin-4-yl
4,6-dichloropyrimidin-2-yl
2,5,6-trichloropyrimidin-4-yl
4,5,6-trichloropyrimidin-2-yl
5-chloro-2-methylsulphonyl-6-methylpyrimidin-4-yl
2,6-dichloro-5-cyanopyrimidin-4-yl
4,6-dichloro-5-cyanopyrimidin-2-yl
2,6-difluoro-5-chloropyrimidin-4-yl
4,6-difluoro-5-chloropyrimidin-2-yl
2,6-difluoro-5-cyanopyrimidin-4-yl
4,6-difluoro-5-cyanopyrimidin-2-yl.

Examples of triazinyl groups which may be represented by $Q^1$ are triazin-2-yl groups having halogen atoms on one or both of the 4- and 6- position. The preferred halogen atoms are F, Br or especially Cl.

The triazinyl groups having only one halogen atom on the nucleus in the 4- or 6- position may have a substituent not reative to cellulose in the remaining 4- or 6- position.

As examples of such non-reactive substituents there may be mentioned alkyl or aryl thio groups, alkoxy or aryloxy groups and optionally substituted amino groups.

Preferred forms of these groups include lower, i.e. $C_{1-4}$ alkoxy, e.g. methoxy, ethoxy, n-propoxy and iso-propoxy, butoxy and lower alkoxy lower alkoxy, e.g. beta-methoxy-ethoxy,

beta-ethoxyethoxy; phenoxy and sulphophenoxy; amino; lower alkylamino, e.g. methylamino, ethylamino, butylamino, di-(lower alkyl)amino, e.g. dimethylamino, diethylamino, methylethylamino, dibutylamino and groups of the latter two types in which the alkyl groups are substituted in particular by OH, CN or $SO_3H$, e.g. beta-hydroxyethylamino, di-(beta-hydroxyethyl)amino, beta-cyanoethylamino, di-(beta-cyanoethyl)amino, beta-sulphoethyl amino, beta-hydroxypropylamino, (beta-hydroxybutyl)ethylamino and (beta-hydroxyethyl)-methylamino; cycloalkylamino, e.g. cyclohexylamino; cyclic amino, e.g. morpholino or piperazino; naphthylamino substituted by 1, 2 or 3 $SO_3H$ groups and optionally substituted phenylamino group.

As a particularly preferred form of the optionally substituted phenylamino groups there may be mentioned groups of the formula:

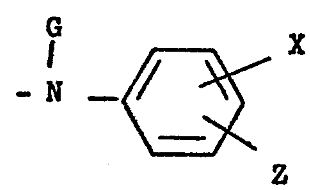

(2)

where G = H, methyl, ethyl, ω -sulphomethyl, beta-carboxy-, beta-hydroxy- or beta-cyanoethyl and Z and X are independently selected from H, COOH, $SO_3H$, $CH_3$, $C_2H_5$, $OCH_3$, $OC_2H_5$, Cl, Br, CN, $NO_2$, $NHCOCH_3$.

As specific examples of such groups there may be mentioned anilino, o-, m- and p-sulphoanilino, o-, m- and p-carboxyanilino, 4- and 5-sulpho-2-carboxyanilino, 4- and 5-sulpho-o-tolylamino, 2,4-, 2,5- and 3,5-disulphoanilino, 2,4-dicarboxyanilino, 4- and 5-sulpho-2-methoxyanilino, N-methyl-

o-, m- and p-sulphoanilino, N-ω-sulphomethylanilino, N-(beta-hydroxyethyl)-3-sulphoanilino.

If desired, the cellulose-reactive group $Q^1$ may take the form:

$$- Ht - Dm - Q^2$$

where Ht is a s-triazine nucleus which contains a cellulose-reactive atom or group, Dm represents a diamine residue linking Ht and $Q^2$ by the 2-amino groups and $Q^2$ is a celulose-reactive group having the meaning stated above for $Q^1$.

In particular it is usually preferred that the cellulose-reactive atom or group on Ht is F, Br or especially Cl and that $Q^2$ is a s-triazine residue as defined above for $Q^1$.

When symbol $Q^1$ represents a s-triazine ring containing a halogen atom and a non-reactive substituent, the latter can be the residue of a coloured amine, e.g. of the azo, anthraquinone or phthalocyanine series, but more especially a residue of formula (1), less the group $Q^1$, viz. a residue of the formula:

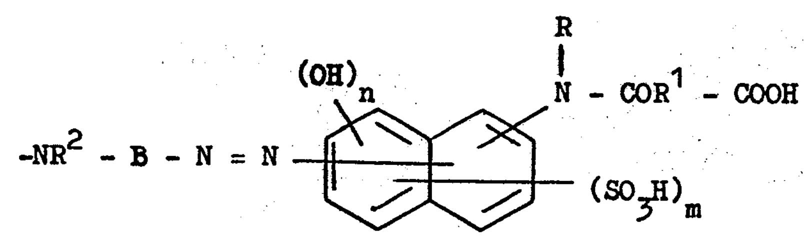

i.e. the dye of formula (1) consists of two such residues linked by a halo-s-triazine radical or two such residues linked through two halo-s-triazine groups and a diamine radical Dm as given

above. In these dyestuffs the halogen may be F or Br but it is usually preferred that it is Cl.

As examples of the diamines $DmH_2$ which may provide the residue Dm there may be mentioned heterocyclic diamines, e.g. piperazine; aliphatic diamines, e.g. alkylene-, hydroxyalkylene- or sulphato-alkylene diamines especially those having 2-6 carbon atoms, e.g. ethylene diamine, 1,2- and 1,3-propylene diamines, 1,6-diaminohexane, beta-hydroxyethylaminoethylamine, 2-hydroxy-1,3-diaminopropane, 2-sulphato-1,3-diaminopropane; other alpha, ω-diamino aliphatic compounds, e.g. triethylene tetramine, di-(beta-aminoethyl)ether; naphthylene diamine sulphonic acids, e.g. 2,6-diaminonaphthalene-1,5- and 4,8-disulphonic acids, 1,5-diaminonaphthalene-3,7-disulphonic acid and diamine derivatives of mono- and di-cyclic compounds of the benzene series, e.g. phenylene diamines and their mono- and disulphonic acids, e.g. m- and p-phenylenediamines, 1,3-phenylenediamine-5-sulphonic and 4,6-disulphonic acids, 1,4-phenylenediamine-2-sulphonic and 2,5-disulphonic acids; diamines of the formula:

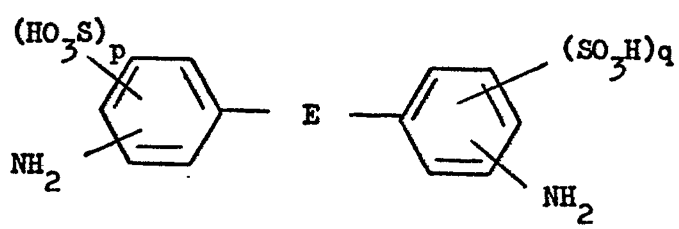

(3)

where p and q are each 0 or 1 and E is a direct link or a group selected from $SO_2$, $CH_2$, $C_2H_2$, NH, NHCONH, e.g.
4,4'-diaminostilbene-2,2'-disulphonic acid
benzidine-2-sulphonic and 2,2'-disulphonic acids
3,3'- and 4,4'-diaminodiphenylureas

4,4'-diaminodiphenylurea-2,2'- and 3,3'-disulphonic acids
4,4'-diaminodiphenylamine-2,2'-disulphonic acid
4,4'-diaminodiphenylmethane
4,4'-diaminodiphenylmethane-2,2'-disulphonic acid
4,4'-diaminodiphenylsulphone
and the N-lower alkyl and N,N'-di(lower alkyl) derivatives of the above diamines, e.g.
4-methylamino and 4-ethylaminoaniline-2-sulphonic acids
N,N'-dimethyl-4,4'-diaminodiphenylamino-2,2'-disulphonic acid.

The radical $R^1$ will usually have its free valencies separated by two or three carbon atoms since such configurations tend to facilitate the formation of cyclic anhydrides of the formula:

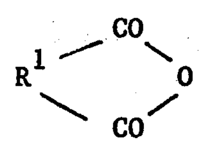

For example $R^1$ may be an unsubstituted hydrocarbylene radical e.g. $CH_2CH_2$, $CH_2CH_2CH_2$ or $CH=CH$ derived from succinic, glutaric or maleic anhydrides respectively. Also these radicals may be substituted e.g. by alkyl or halogen and for instance $R^1$ can be $CCl=CCl$ from dichloromaleic anhydride. Further the atoms of $R^1$ carrying the free valencies may be part of a ring system and in this instance also the free valencies will usually be separated by two or three carbon atoms. The ring systems may be aromatic e.g. 1,2-phenylene derived from phthalic anhydride optionally with other ring substituents such as $SO_3H$, halogen, alkyl, or 1,8-naphthylene from naphthalene-1,8-dicarboxylic acid. Alternatively the ring may be less unsaturated or fully saturated e.g. $R^1$ may be derived from 1,2-cyclohexane dicarboxylic anhydride or the anhydrides of various cyclohexene or cyclohexadiene dicarboxylic acids. As specific examples of cyclic anhydrides which may serve to furnish $R^1$

there may be mentioned phthalic anhydride, 4-sulphophthalic anhydride, 4-methylphthalic anhydride, tetrachloro- or tetrabromophthalic anhydride, cyclohexane-1,2-dicarboxylic anhydride, cyclohex-1-ene-1,2-dicarboxylic anhydride, cyclohex-4-ene-1,2-dicarboxylic anhydride, cyclohexa-1,4-diene-1,2-dicarboxylic anhydride and cyclohexa-2,4-diene-1,2-dicarboxylic anhydride.

Some of the radicals $R^1$ may have cellulose-reactive properties e.g. when it is derived from maleic or dichloromaleic anhydrides, however the reactivity of these groups is much less than those specified for Q. It is believed in this case that when the dyes of formula (1) are applied to cellulose textiles under conditions appropriate to react the group Q, little or no reaction occurs with the group $R^1$.

Preferred dyes of formula (1) have one or more of the following features:

(1) n = 1.

(2) R and $R^2$ are $CH_3$, $C_2H_5$ or especially H.

(3) m is 1 or 2.

(4) Q is of the form $NR^2Q^1$ where $Q^1$ is halopyrimidinyl and especially halotriazinyl. Particularly preferred dyes have $Q^1$ as dichlorotriazinyl.

(5) $R^1$ is derived from one of the following ahydrides: glutaric, sulphophthalic, tetrachloro or tetrabromophthalic, cyclohexane-1,2-dicarboxylic, cyclohexene-1,2-dicarboxylic, cyclohexadiene-1,2-dicarboxylic and especially phthalic and more especially succinic and maleic.

(6) B is a radical represented by the formulae:

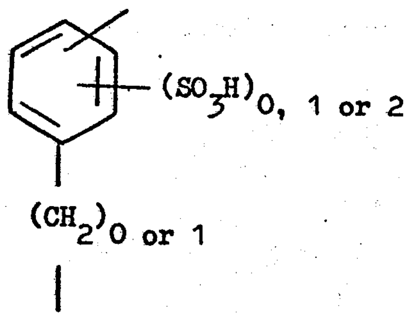

or

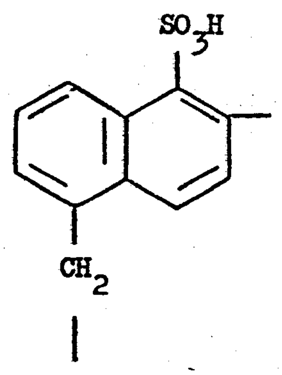

or

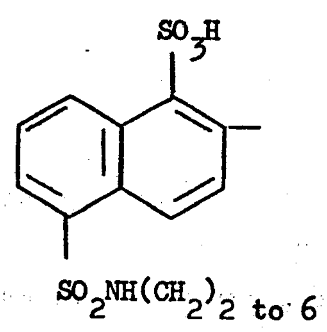

The preferred configurations for the naphthalene nucleus of formula (1) are

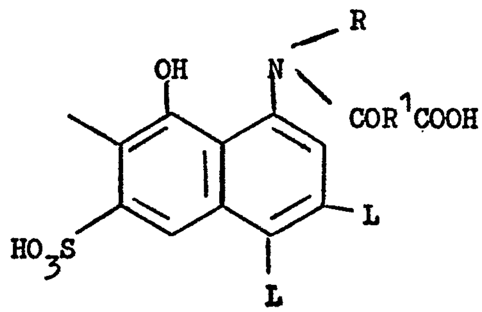

where one L is $SO_3H$ and the other is H

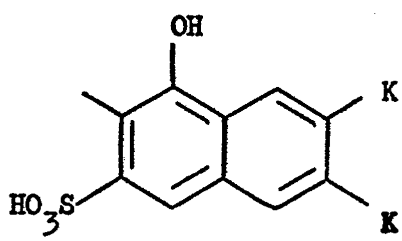

where one K is 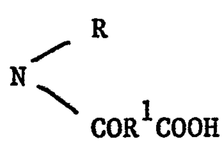 and the other is H.

The invention also provides processes for the manufacture of dyestuffs of formula (1).

Dyestuffs of formula (1) where n = 1 may be manufactured by coupling a diazonium salt of the amine of formula:

$$Q - B - NH_2 \quad (4)$$

with a coupling component of the formula:

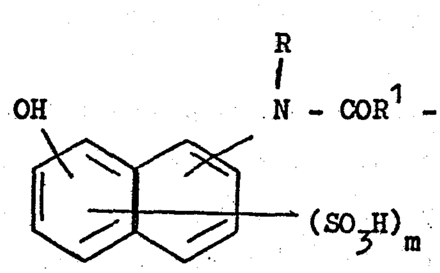

(5)

where Q, B, R, $R^1$ and m have the meanings given above.

The coupling may be carried out under convention conditions e.g. in an aqueous medium at 0-30°C with adjustment of pH when necessary.

The diazonium salt of the amine of formula (4) can also be formed in a conventional fashion e.g. treating the amine with sodium nitrite in an aqueous acid medium at 0-5°C.

As examples of amine of formula (4) to yield diazonium salts for use in the above process there may be mentioned:

2-, 3- and 4-vinylsulphonylaniline
2-, 3- and 4-beta-sulphatoethylsuylphonylaniline
2-methoxy-5-beta-sulphatoethylsulphonylaniline
3-(dichlorotriazinylamino)aniline-4-sulphonic acid
4-(dichlorotriazinylamino)aniline-2,5-disulphonic acid
3-(N-ethyl-N-dichlorotriazinylaminomethyl)aniline-6-sulphonic acid
2-amino-5-(beta-dichlorotriazinylaminoethylaminosulphonyl)-naphthalene-1-sulphonic acid.

As examples of the coupling component of formula (5) there may be mentioned:

1-(N-3-carboxypropionylamino)-8-naphthol-3,5- and 3,6-disulpho naphthalene

1-(N-3-carboxyacryloylamino)-8-naphthol-3,5- and 3,6-disulpho naphthalene

1-(N-2-carboxybenzoylamino)-8-naphthol-3,5- and 3,6-disulpho naphthalene

2-(N-3-carboxypropionylamino)-8-naphthol-3-sulphonic acid.

As modification to this process it is possible to use amines of the formula $HOCH_2CH_2SO_2 - B - NH_2$ in place of the amine of formula (4) and treat the resulting dyestuff with sulphuric acid to form products in which Q is $HO_3SO.CH_2CH_2.SO_2$-.

An alternative process for the manufacture of dyestuffs of formula (1) comprises reacting an anhydride of the formula:

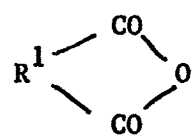

with an amino dye of the formula:

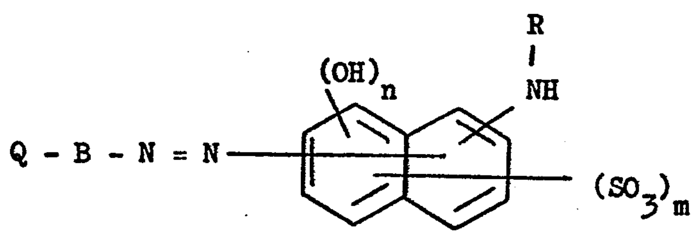

(6)

where Q, B, R, $R^1$ , m and n have the meanings given above.

This reaction may be carried out under conventional conditions, for example in an aqueous medium at room temperature maintaining the pH weakly acid to neutral. The anhydrides are

often solids and by using them in finely ground conditions reaction is facilited in some instances. Gentle heating e.g. up to 60°C can promote reaction if necessary.

Unwanted reaction of the anhydride with the OH group, if present, does not usually occur to any great extent but can be reversed if it does occur by gentle hydrolysis e.g. warming in a mildly alkaline aqueous medium.

As examples of anhydrides for use in this process there may be mentioned succinic, maleic, glutaric, phthalic, sulphophthalic, tetrachloro- or tetrabromophthalic, cyclohexane-1,2-dicarboxylic and cyclohex-4-ene-1,2-dicarboxylic anhydrides.

Amino dyes of formula (6) for use in this process may be obtained by coupling the diazonium salts of amines of formula (4) as described above in connection with the first process with aminonaphthalene or aminonaphthol sulphonic acids of the formula:

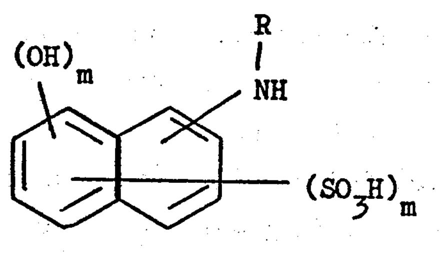

where R, m and n have the meanings given above. Examples of such aminonaphthalene or aminonaphthol sulphonic acids include:

1-aminonaphthalene-6- or 7-sulphonic acids
1-amino-8-naphthol-3,5- or 3,6-disulphonic acids
2-amino-8-naphthol-6-sulphonic acid
2-amino-5-naphthol-7-sulphonic acid
2-N-methylamino-5-naphthol-7-sulphonic acid.

This alternative process is particularly appropriate for the manufacture of dyes in which n = 0.

A further process for the manufacture of dyes of formula (1) in which Q is of the form $NR^2Q^1$ comprises reacting a dyebase of the formula:

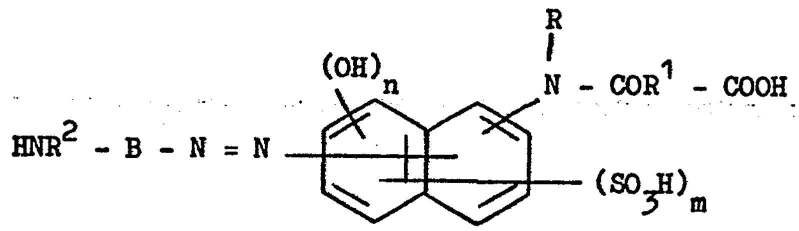

with a compound of the formula $Q^1$hal where B, R, $R^1$, $R^2$, n, m and $Q^1$ have the meanings given above and hal is halogen.

The above further process of the present invention may be conveniently carried out in an aqueous medium desirably in the presence of an acid binding material, e.g. sodium carbonate, bicarbonate or hydroxide and at a temperature appropriate to the reactivity of the compound $Q^1$hal usually in the range 0-100°C.

Specific examples of compounds $Q^1$hal will be apparent from the specific examples of $Q^1$ given above. It is normally preferred that hal is chlorine, e.g. $Q^1$hal is 2,3-dichloro quinoxaline carbonyl chloride, cyanuric chloride, methoxy dichloro-s-triazine, 2,4,5,6-tetrachloropyrimidine etc. but in some instances hal may be more conveniently another halogen, e.g. fluorine when this is the cellulose-reactive substituent present in $Q^1$, e.g. $Q^1$hal may be 2,4,6-trifluoro-5-chloropyrimidine to introduce the difluoro-5-chloropyrimidinyl group.

The dyebase for use in the further process may be conveniently obtained by coupling the coupling component of formula (5) described in connection with the first process of the present invention with the diazonium salt from an amine of the formula $HNR^2.B.NH_2$ in those instances where the $NH_2$ can be diazotised without reaction of the $HNR^2$ group e.g. when this is aliphatic. In those instances where $HNR^2$ is an aromatic primary amino which would be changed during diazotisation of the $NH_2$ in $HNR^2.B.NH_2$ it may be possible to obtained the required dyebase by diazotising and coupling a nitroamine of the formula $O_2N.B.NH_2$ e.g. 4-nitroaniline-2-sulphonic acid and subsequently reducing the nitro group in the resultant nitroazo compound.

When the reactive group $Q^1$ is to have the formula $- Ht - Dm - Q^2$ as defined above the reactant $Q^1hal$ used in the above process has the formula $hal - Ht - Dm - Q^2$.

This compound may be obtained by reacting a diamine $DmH_2$ with 1 mole of $Q^2hal$, where $Q^2$ is a cellulose-reactive group as defined above and 1 mole of a s-triazine compound having the formula:

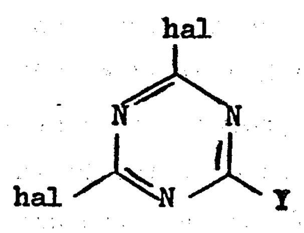

where Y is a cellulose-reactive substituent. In a preferred instance where Ht is a chloro-s-triazinyl group Y is Cl, i.e. the above s-triazine compound is cyanuric chloride.

The reactive dyes of formula (1) wherein the cellulose-reactive group contains a s-triazine nucleus substituted by a Cl, Br or F atom and an amino or substituted amino group can also be obtained by reacting a dye of formual (1) in which Q contains dichloro-, dibromo- or difluoro-s-triazine group with ammonia or an amine.

This process can conveniently be carried out by stirring the reactants in an aqueous medium, optionally in the presence of a water-soluble organic solvent, at a temperature of from 30-60°C, and preferably maintaining the pH at from 5-8 by adding an acid-binding agent to neutralise the hydrogen halide formed during the reaction. Suitable acid-binding agents are alkali metal hydroxides, carbonates and bicarbonates, or an excess of ammonia or aliphatic amine where this is one of the reactants.

Also, by use of a diamine in the proportion of 1 mole of diamine to 2 moles of a dichloro-, dibromo- or difluoro-s-triazinyl dye, a product is obtained of the kind mentioned above where the dyestuff as a whole contains two groups of formula (1), less $Q^1$, linked through two chloro-, bromo- or fluoro-s-triazine groups and a diamine radical. In the above process, there may be used any of the diamines $DmH_2$ mentioned above.

Alternatively, by reacting a dichloro-, dibromo- or difluoro-s-triazine dye with a diamine $DmH_2$ in equimolar proportion, the resulting product contains a free amino group and can be reacted with a compound of the formula $Q^1$hal as defined above whereby the dyestuff obtained contains a cellulose-reactive group of formula $- Ht - Dm - Q^2$ as defined above wherein Ht is chloro-, bromo- or fluorotriazinyl.

Dyestuffs of this kind can alternatively be obtained by first reacting the diamine with one mole of $Q^1$hal and reacting the resulting monoamine with one mole of dichloro-, dibromo- or difluoro-s-triazine dye.

In the above reactions where one mole of diamine is reacted with one mole of $Q^1$hal or with a dyestuff with a dichloro-, dibromo- or difluoro-s-triazinyl group it is usually preferred that the diamine has amino groups of different reactivity to minimise the concomitant formation of unwanted reaction products from one mole of the diamine with two moles of the other reactant.

The dyestuff prepared by the above processes may be isolated by any conventional means, e.g. spray drying or precipitation and filtration.

The dyes are represented above in their free acid form and may be isolated as such. However, it is usually found more convenient to isolate the dyes in the form of salts particularly alkali metal salts especially sodium.

The dyestuffs of the present invention may be used for colouring a wide range of textile materials containing hydroxyl or amino groups, e.g. wool, silk, synthetic polyamides and natural or regenerated cellulose, for example cotton or viscous rayon materials, by conventional methods used for colouring such materials with water-soluble reactive dyes, e.g. they are preferably applied in conjunction with a treatment with an acid binding agent, e.g. caustic soda, sodium carbonate, phosphate, silicate or bicarbonate, which may be applied to the celulose textile materials before, during or after the application of the dyestuff. The method, technique and conditions used for applying the dyestuff to the textile material will be selected according to various factors, e.g. the nature of the fibre or fibres present and the physical form of the textile material.

The dyes of the present invention are often found to be specially suited to colouring materials by pad batch techniques where they give strong colours which build-up well e.g. they are better than acetylamino dyes of similar structure. They further show a good ability to discharge i.e. be removed from the substrate when overprinted by discharge pastes e.g. containing reducing agents such as sodium hydrosulphite.

The invention is illustrated by the following Examples.

Example 1

A solution of 31.9 g of 1-amino-8-naphthol-3,6-disulphonic acid was stirred in 200 g of water at 20°C and pH 8.0. 15 g of well ground maleic anhydride was added to the stirred solution and the mixture stirred at 20°C for 1 hour when no aromatic amine could be detected by conventional tests. The pH of the solution was adjusted to 8.0 by addition of soda ash and the solution heated to 60°C for 30 minutes with stirring. The pH of the solution was then adjusted to 7.0 by addition of hydrochloric acid and the reaction product precipitated by addition of 45 g of sodium chloride.

The product was filtered off and dried at 45°C. The proton nmr spectrum of the product was consistent with its formulation as 4-(3-carboxyacrylamino)-5-hydroxynaphthale-2,7-disulphonic acid.

A solution of 4.0 g of cyanuric chloride in 30 g of acetone was added to a mixture of 50 g of ice and 50 g of water and the mixture stirred at 0-5°C. A solution of 3.6 g of 1,3-phenylenediamine-4-sulphonic acid in 100 g of water at pH 7.0 was added dropwise to the above suspension during 15 minutes and the mixture stirred at 0-5°C for one hour. The pH of the mixture was raised to 7.0 by addition of 2N sodium carbonate solution as required, and then re-acidified by addition of 6 g of hydrochloric acid (36°Tw). A solution of 1.4 g of sodium nitrite in 20 g of water is then added and the suspension stirred at 0-5°C for one hour. Slight excess of nitrous acid was removed by addition of 10% aqueous sulphamic acid solution.

The diazo component above was then added to a solution of 8.4 g of 4-(3-carboxyacrylamido)-5-hydroxynaphthalene-2,7-disulphonic acid prepared above dissolved in 150 g of water at 0-10°C and pH 6.5. The pH of the mixture was raised to 6.5 and stirred at 0-10°C for one hour. The solution was screened and the dyestuff precipitated by addition of sodium chloride to the filtrate. The dyestuff was dried at 20°C under vacuum.

When applied to cellulose textiles by a pad-batch process it gave mid red shades with good fastness to washing and to light. The dyed fabrics had excellent discharge properties when subjected to conventional discharge procedures.

Further carboxy containing naphthalene coupling components prepared similarly to that described in Example 1 are shown in the following Table. They were all prepared in a similar manner but in those instances containing a single sulphonic acid group it was advantageous to maintain the pH of the mixture at 6-7 during reaction between the anhydride and the naphthylamine with sodium carbonate as required.

Table

| | Naphthylamine | Anhydride | Product |
|---|---|---|---|
| A | 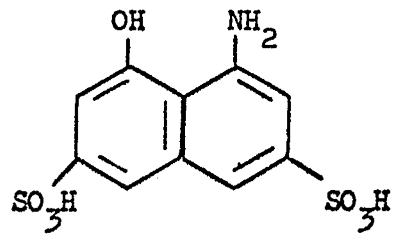 | Succinic | 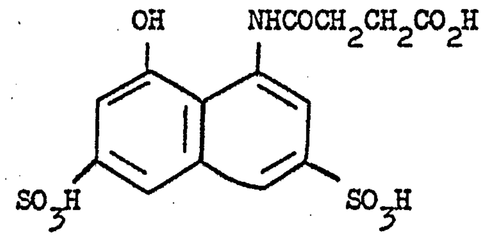 |
| B | " | Phthalic | 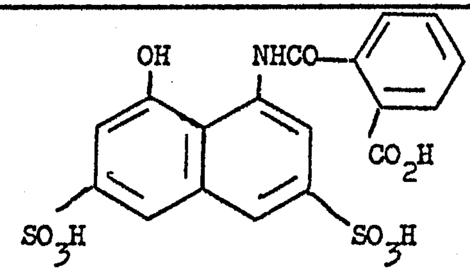 |
| C | 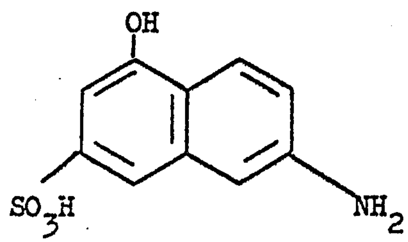 | " | 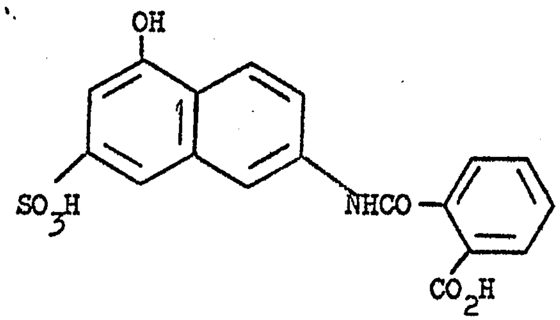 |

Table (continued)

| | Naphthylamine | Anhydride | Product |
|---|---|---|---|
| D | 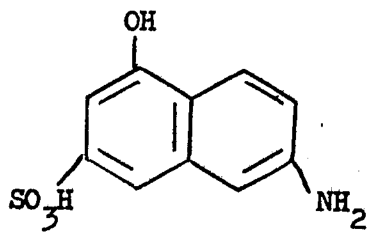 | Maleic | 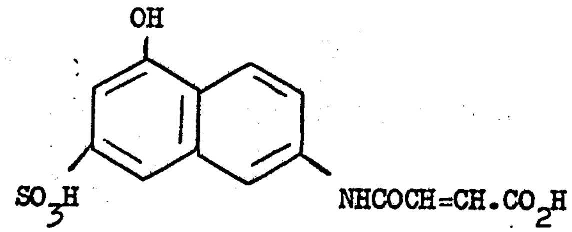 |
| E | " | Succinic | 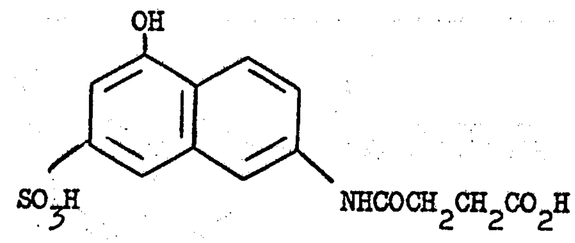 |

Table (continued)

| | Naphthylamine | Anhydride | Product |
|---|---|---|---|
| F | 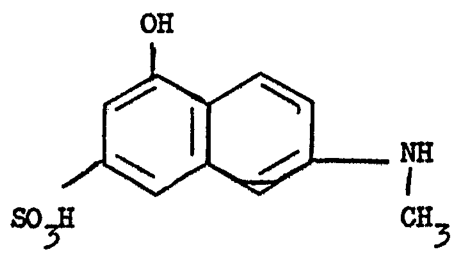 | Succinic | 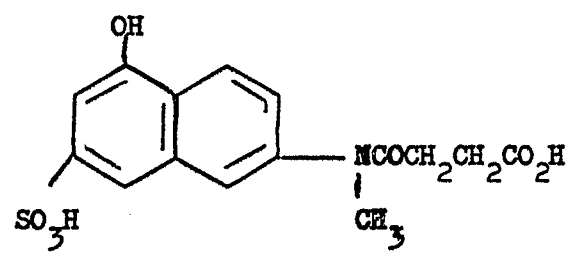 |
| G | " | Maleic | 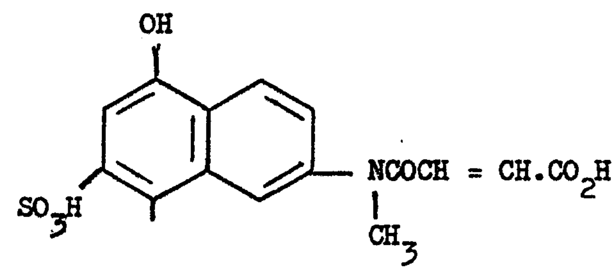 |

Table (continued)

| | Naphthylamine | Anhydride | Product |
|---|---|---|---|
| H | 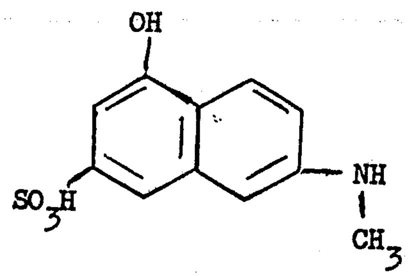 | Phthalic | 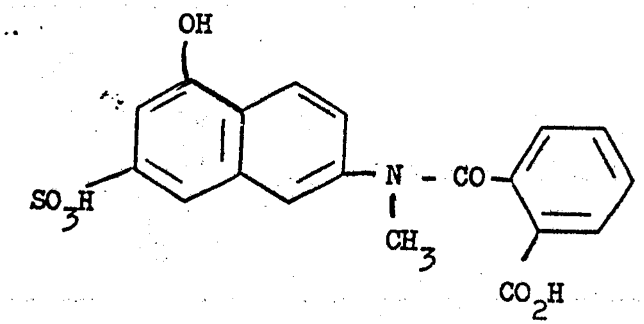 |
| I | 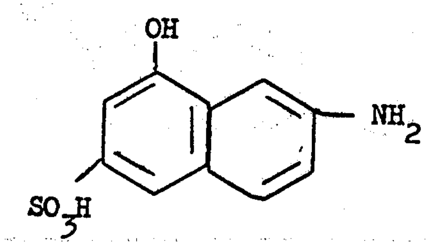 | " | 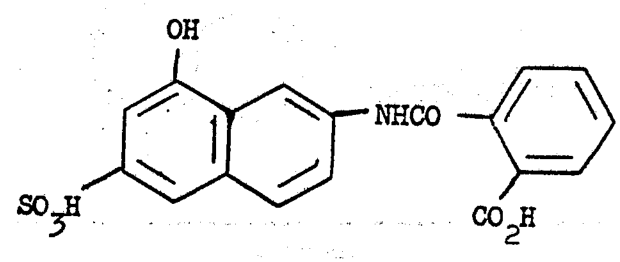 |

Table (continued)

| | Naphthylamine | Anhydride | Product |
|---|---|---|---|
| J | 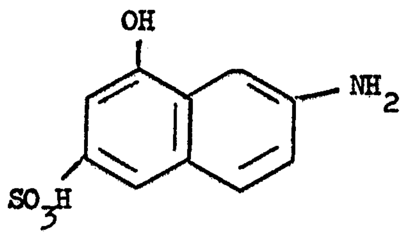 | Succinic | 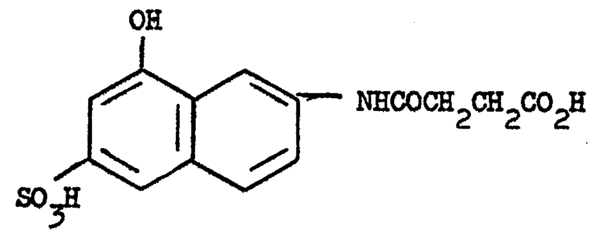 |
| K | " | Maleic | 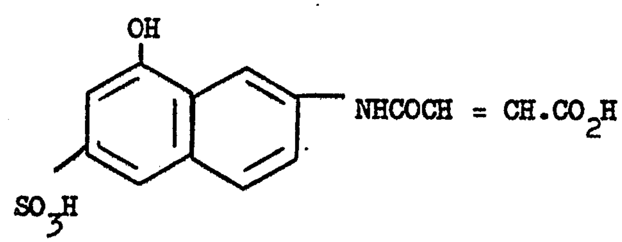 |

Further carboxy containing naphthalene coupling components can be obtained and are detailed in the following table.

| | Naphthylamine | Anhydride | Product |
|---|---|---|---|
| L | 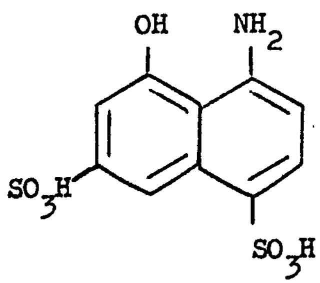 | succinic | 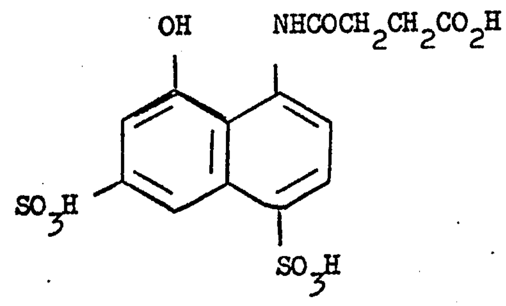 |
| M | " | maleic | 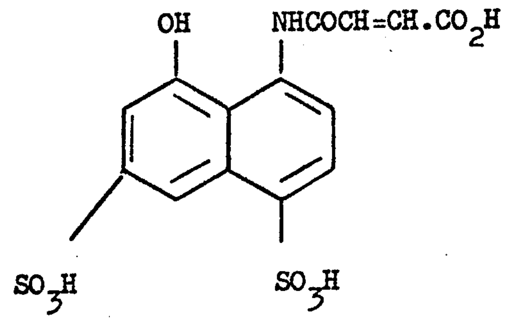 |

| | Naphthylamine | Anhydride | Product |
|---|---|---|---|
| N | 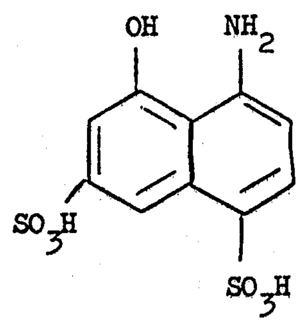 | tetrachlorophthalic | 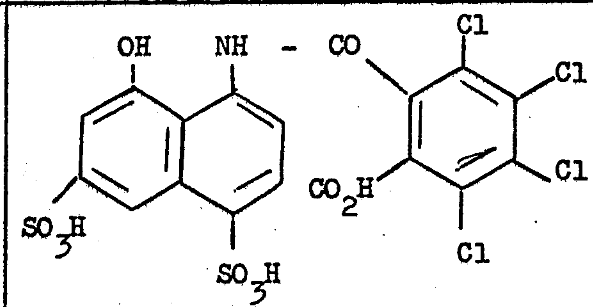 |
| O | 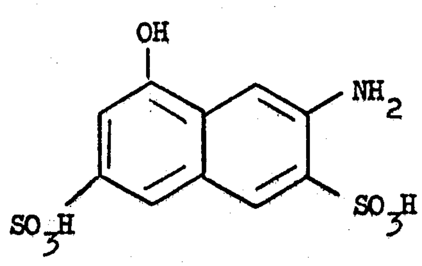 | succinic | 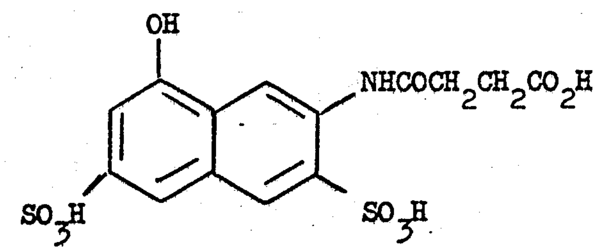 |

| | Naphthylamine | Anhydride | Product |
|---|---|---|---|
| P | 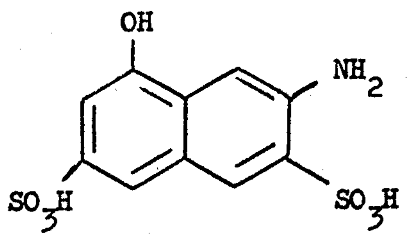 | maleic | 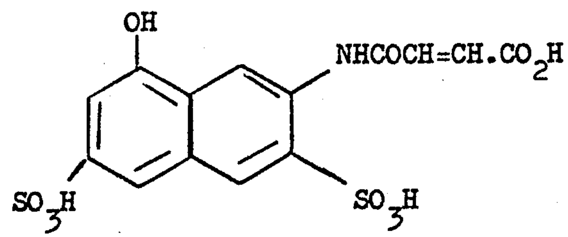 |
| Q | 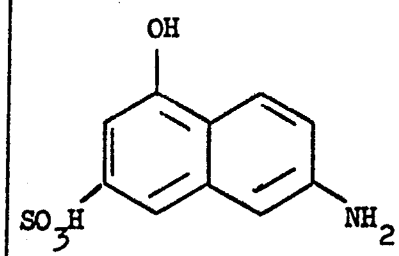 | cyclohexane-1,2-dicarboxylic acid anhydride | 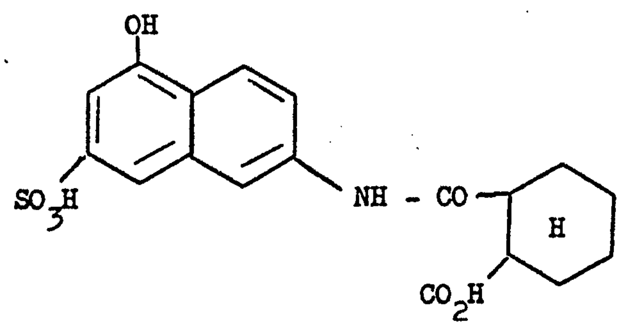 |

| | Naphthylamine | Anhydride | Product |
|---|---|---|---|
| R | 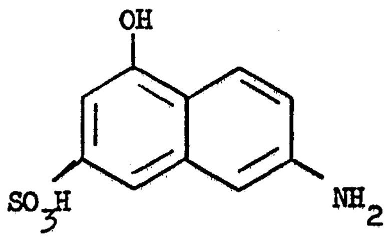 | 1-cyclohexene-1,2-dicarboxylic acid anhydride | 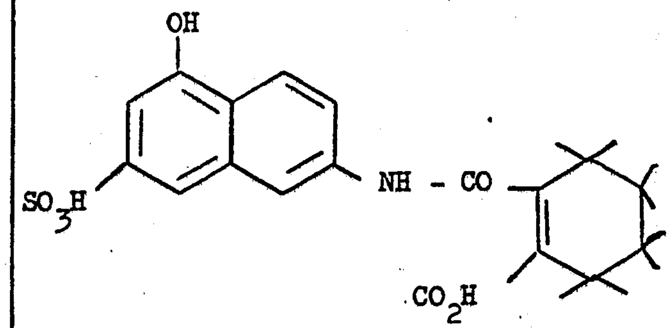 |
| S | " | glutaric | 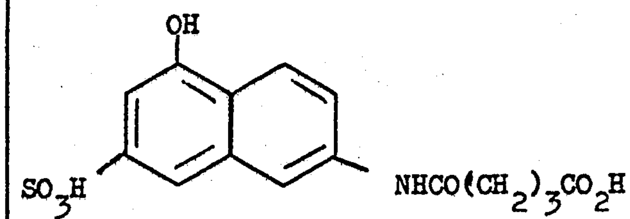 |

| | Naphthylamine | Anhydride | Product |
| --- | --- | --- | --- |
| T | 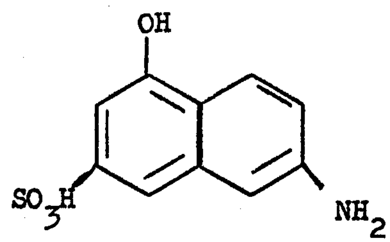 | tetrabromophthalic | 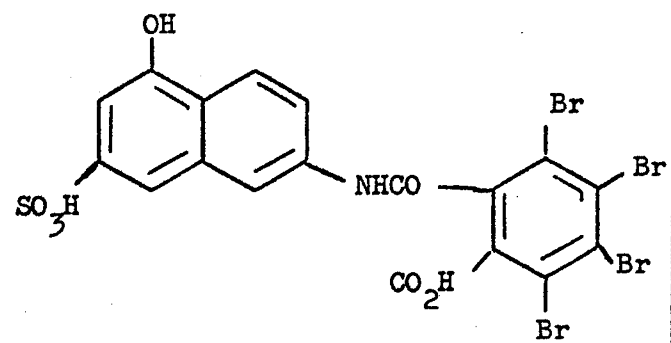 |
| U | " | 4-sulphophthalic | 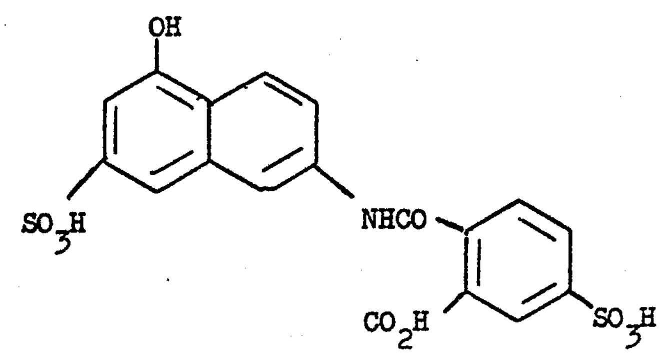 |

| | Naphthylamine | Anhydride | Product |
|---|---|---|---|
| V | 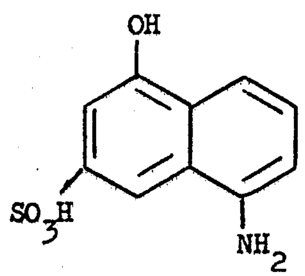 | succinic | 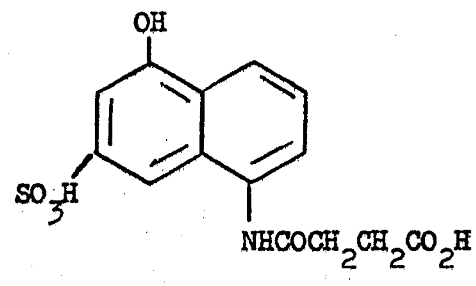 |
| W | 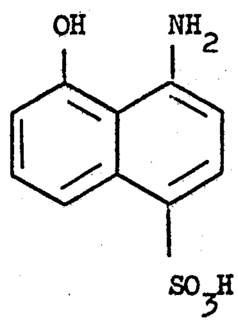 | " | 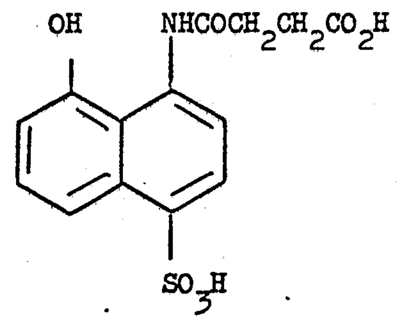 |

| | Naphthylamine | Anhydride | Product |
|---|---|---|---|
| X | 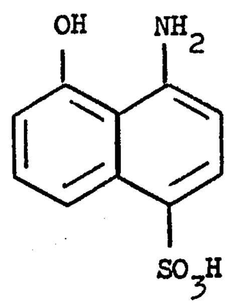 | maleic | 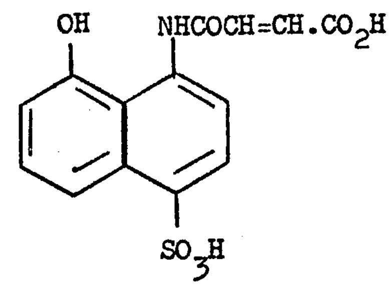 |
| Y | " | glutaric | 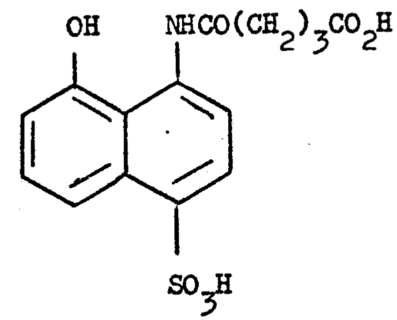 |

| | Naphthylamine | Anhydride | Product |
|---|---|---|---|
| Z | 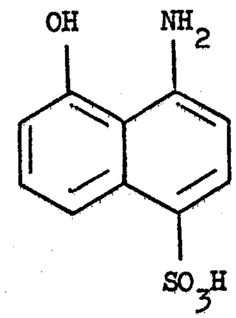 | 4-methylphthalic | 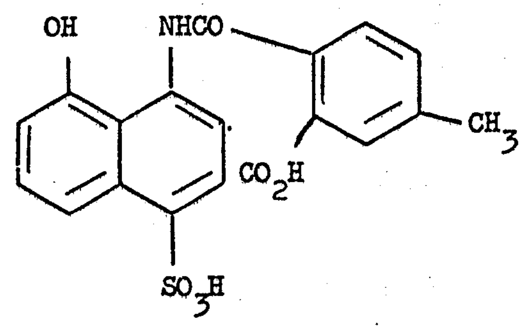 |

Examples 2-11

By following the general procedure of Example 1 a diamine as given in column II of the following table was reacted with the chloride of a cellulose-reactive compound as detailed in column III and the resulting product diazotised and coupled with a coupling component identified in column IV by the letter from the preceding table. The colour produced on cellulose substrates is given in column V.

Table

| I | II | III | IV | V |
|---|---|---|---|---|
| 2 | 1,3-diaminobenzene-4,5-disulphonic acid | cyanuric chloride | E | Orange |
| 3 | " | " | D | " |
| 4 | " | " | B | Red |
| 5 | " | " | C | Orange |
| 6 | " | " | A | Red |
| 7 | " | " | As in Example 1 | " |
| 8 | 1,4-diaminobenzene-2,5-disulphonic acid | " | F | Scarlet |
| 9 | " | " | G | " |
| 10 | " | " | E | " |
| 11 | " | " | D | " |

Example 12

A solution (2.2 g) of 3-(N-ethylaminomethyl)aniline-6-sulphonic acid in 120 g of water at pH 7.5 was cooled to 0-5°C and acidified with 3 g of concentrated hydrochloric acid. The mixture was diazotised by the gradual addition of 5 g of a 2N solution of sodium nitrite with stirring at 0-5°C. The mixture was stirred for 1 hour and slight excess of nitrous acid was removed by addition of 10% aqueous sulphamic acid solution as required.

A solution of 3.4 g of 2-(N-3-carboxyacryloylamino)-5-naphthol-7-sulphonic acid in 150 g of water at pH 7.2 was stirred at 5°C. The diazotised amine above was added and the pH of the mixture adjusted to 4.0 by addition of sodium acetate crystals. The mixture was stirred at 0-10°C for 18 hours and the precipitated dyebase filtered and dried at 50°C.

A solution of 6.0 g of cyanuric chloride in 70 g of acetone was added to a mixture of 75 g of ice and 75 g of water and the mixture stirred at 0-5°C. A solution of 18.3 g of dyebase prepared as described above, in 150 g of water at 20°C and pH 7.0 was added dropwise to the suspension of cyanuric chloride maintaining the pH at 8.5 by addition of sodium carbonate solution as required. The solution was stirred at 20°C pH 8.5 for 1 hour when reaction was complete. The solution was screened and the dyestuff precipitated by addition of sodium chloride. Before drying the dyestuff paste was well mixed with 2 g sodium diethylmetanilate buffer and then dried at room temperature under vacuum.

When applied to cellulose textiles by a pad batch process it gave orange shades with good fastness to washing and to light. The dyed fabric had excellent discharge properties when subjected to discharge procedures such as sodium hydrosulphite treatment.

Examples 13-22

By following the general procedure of Example 12 the diazo component of the amine detailed in column II was coupled with the coupling component identified in column IV by the letter from the earlier table. The dyebase so produced was then reacted with the acylating agent listed in column III. The colour produced by the reactive dyestuff on cellulose substrates is given in column V.

Table

| I | II | III | IV | V |
|---|---|---|---|---|
| 13 | 2-amino-5-(beta-aminoethylaminosulphonyl)-naphthalene-1-sulphonic acid | cyanuric chloride | J | Reddish-orange |
| 14 | " | " | K | " |
| 15 | " | " | A | Bluish-red |
| 16 | " | " | B | " |
| 17 | " | " | D | Orange |
| 18 | 3-(N-ethylaminomethyl)aniline-6-sulphonic acid | " | G | " |
| 19 | 3-(beta-aminoethylaminosulphonyl)aniline | " | A | Red |
| 20 | " | " | As in Example 1 | " |
| 21 | 3-(beta-aminoethyl)aniline | " | " | " |
| 22 | 3-(N-n-propylaminomethyl)aniline-6-sulphonic acid | " | " | " |

Examples 23-27

Further dyes of the invention can be obtained by replacing the cyanuric chloride in the procedure of Example 1 with an equivalent amount of the following:

| Example | |
|---|---|
| 23 | 2,4,6-trichloro-5-cyanopyrimidine |
| 24 | 2,4,6-trifluoro-5-chloropyrimidine |
| 25 | 2,4,6-trifluoro-5-cyanopyrimidine |
| 26 | 2,4-difluoro-6-anilino-s-triazine |
| 27 | 2,4,5,6-tetrachloropyrimidine. |

Examples 28-31

By following the general procedure of Example 1 a diamine as given in column II of the following table was reacted with the chloride of a cellulose-reactive compound as detailed in column III and the resulting product diazotised and coupled with a coupling component identified in colunn IV by the letter from the preceding table. The colour produced on cellulose substrates is given in column V.

| I | II | III | IV | V |
|---|---|---|---|---|
| 28 | 1,3-diaminobenzene-4-sulphonic acid | cyanuric chloride | A | Red |
| 29 | " | " | E | Orange |
| 30 | 1,3-diaminobenzene-4,6-disulphonic acid | " | C | " |
| 31 | " | " | D | " |

Examples 32-36

By following the general procedure of Example 12 the diazo component of the amine detailed in column II was coupled with the coupling component identified in column IV by the letter from the earlier table. The dyebase so produced was then reacted with the acylating agent listed in column III. The colour produced by the reactive dyestuff on cellulose substrates is given in column V.

| I | II | III | IV | V |
|---|---|---|---|---|
| 32 | 2-amino-5-(beta-aminoethylaminosulphonyl)-naphthalene-1-sulphonic acid | cyanuric chloride | B | Red |
| 33 | 2-amino-5-(gamma-aminopropylaminosulphonyl)-naphthalene-1-sulphonic acid | " | A | " |
| 34 | 4-(beta-aminoethylsulphonyl)aniline | " | As in Example 1 | " |
| 35 | " | " | A | " |
| 36 | 4-(beta-aminoethyl)aniline | " | As in Example 1 | " |

Examples 37-54

Further examples of the invention may be prepared by the process described in Example 1 or Example 12. Column II describes the type of process suitable, Column III describes the diazo component, Column IV describes the acylating agent, and Column V describes the coupling component.

| I | II | III | IV | V |
|---|---|---|---|---|
| 37 | As Example 1 | 1,3-diamino-4-sulphonic acid | cyanuric chloride | L |
| 38 | " | " | " | M |
| 39 | " | " | " | N |
| 40 | " | " | 2,3-dichloroquinoxaline-5-carbonyl chloride | L |
| 41 | " | " | 2,3-dichloroquinoxaline-6-carbonyl chloride | L |
| 42 | " | " | 2,3-dichloroquinoxaline-5-sulphonyl chloride | L |
| 43 | " | " | 2,3-dichloroquinoxaline-6-sulphonyl chloride | L |
| 44 | " | " | 4,6-dichloro-6-methyl-2-methylsulphonylpyrimidine | L |
| 45 | " | " | 2,4,6-trichloropyrimidine | L |
| 46 | As Example 12 | 4-aminomethylaniline-2-sulphonic acid | cyanuric chloride | O |
| 47 | " | 4-aminomethylaniline | " | P |
| 48 | " | 3-(N-methylaminomethyl)-aniline-6-sulphonic acid | " | Q |

| I | II | III | IV | V |
|---|---|---|---|---|
| 49 | As Example 12 | 3-(N-butylaminomethyl)-aniline-6-sulphonic acid | cyanuric chloride | R |
| 50 | " | 5-aminomethyl-2-naphthylamine-1-sulphonic acid | 2,4,6-trifluoro-5-chloropyrimidine | S |
| 51 | " | " | 2,4-difluoro-6-(2'-chloroanilino)-s-triazine | T |
| 52 | " | " | " | U |
| 53 | " | 5-aminomethyl-2-naphthylamine-1,7-disulphonic acid | " | V |
| 54 | " | " | 2,4,6-trichloropyrimidine | W |

Examples 55-65

A solution of 1/100 mole of the dyestuff prepared in Example 1 can be stirred in 200g of water at pH 7.0 and reacted with 1/100 mole of aniline at 35-40°C for 2 hours, maintaining the pH at 6-7 by addition of 2N sodium carbonate solution. The resulting dyestuff can be precipitated by addition of sodium chloride, separated by filtration and dried at 45°C. In place of the aniline described above there may be used equivalent amounts of the amines listed below.

Example 56 Aniline-3-sulphonic acid
Example 57 N-methylaniline
Example 58 4-chloroaniline
Example 59 ammonia
Example 60 methylamine
Example 61 2-naphthylamine-6-sulphonic acid
Example 62 cyclohexylamine
Example 63 beta-hydroxyethylamine
Example 64 morpholine
Example 65 4-vinylsulphonyl aniline.

Examples 66-74

In place of the 1/100 mole of aniline used in Example 55, there may be used 1/200 mole of 4,4'-diaminostilbene-2,2'-disulphonic acid and the reaction conducted at 35-40°C for 5 hours, keeping the pH at 6-7 by addition of 2N sodium carbonate solution as required. The resulting bisazo dye can be precipitated by addition of sodium chloride, separated by filtration and dried at 45°C.

In place of the 4,4'-diaminostilbene-2,2'-disulphonic acid used above there may be used equivalent amounts of the amines listed below.

Example 67 ortho-phenylenediamine
Example 68 meta-phenylenediamine
Example 69 para-phenylenediamine

Example 70 I,3-phenylenediamine-4-sulphonic acid
Example 71 benzidine-2,2'-disulphonic acid
Example 72 2,6-diaminonaphthalene-4,8-disulphonic acid
Example 73 ethylenediamine
Example 74 piperazine.

Examples 75-77

A solution of 18.5g of 4-beta-hydroxyethylsulphonylaniline may be stirred in 250ml water and 15ml of hydrochloric acid (36°Tw) at 0-5°C, and diazotised by careful addition of 6.9g sodium nitrite. After stirring for 1 hour the diazotised amine can be added to a solution of 42g of compound B of the preceding Table in 300ml of water stirred at 5-10°C maintaining the pH at 6-7 by addition of sodium carbonate solution. The monoazo compound can be precipitated by acidifying to pH 2.0 with concentrated hydrochloric acid and addition of sodium chloride. The azo can be isolated by filtration and dried at 50°C. The dry azo compound can then be stirred in 50ml of concentrated sulphuric acid, the mixture poured onto crushed ice and the sulphated dyestuff precipitated by addition of sodium chloride.

In place of the 4-beta-hydroxyethylsulphonylaniline used above there may be used an equivalent amount of the following:

Example 76 3-beta-hydroxyethylsulphonylaniline
Example 77 2-methoxy-5-beta-hydroxyethylsulphonylaniline.

## CLAIMS

1. Reactive dyes which in the free acid form are of the formula:

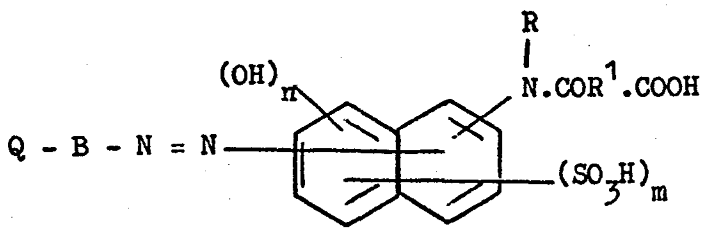

(1)

wherein Q is a cellulose reactive group attached to a carbon atom of B and selected from $HO_3SO.CH_2CH_2.SO_2$, $CH_2{=}CH.SO_2$, and $NR^2Q^1$ where $Q^1$ is halotriazinyl, halopyrimidinyl, 2,3-dichloroquinoxaline-5- or 6- sulphonyl, or 2,3-dichloroquinoxaline-5- or 6-carbonyl;

R and $R^2$ are each independently H or $C_{1-4}$ alkyl;

B is a radical containing a benzene or naphthalene nucleus which is linked directly to the azo group;

$R^1$ is the radical of a cyclic dicarboxylic anhydride

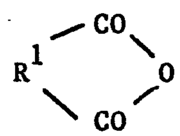

n is 0 or 1;

and m is 1 or 2,

providing that when B is of the benzene series and $R^1$ is $CH_2CH_2$, Q is not $CH_2{=}CHSO_2$ or $HO_3SO.CH_2CH_2SO_2$.

2. Reactive dyes as claimed in claim 1 in which n = 1.

3. Reactive dyes as claimed in claims 1 and 2 in which R and $R^2$ are each independently H, $CH_3$ or $C_2H_5$.

4. Reactive dyes as claimed in any one of claims 1 to 3 in which Q is of the form $NR^2Q^1$ in which $Q^1$ is halopyrimidinyl or halotriazinyl.

5. Reactive dyes as claimed in claim 4 in which $Q^1$ is dichlorotriazinyl.

6. Reactive dyes as claimed in any one of claims 1 to 5 in which $R^1$ is derived from one of the following anhydrides: glutaric, sulphophthalic, tetrachloro or tetrabromophthalic, cyclohexane-1,2-dicarboxylic, cyclohexene-1,2-dicarboxylic, cyclohexadiene-1,2-dicarboxylic, phthalic, succinic and maleic.

7. Reactive dyes as claimed in claim 6 in which $R^1$ is derived from succinic or maleic anhydride.

8. Reactive dyes as claimed in any one of claims 1 to 7 in which B is a radical represented by the formulae:

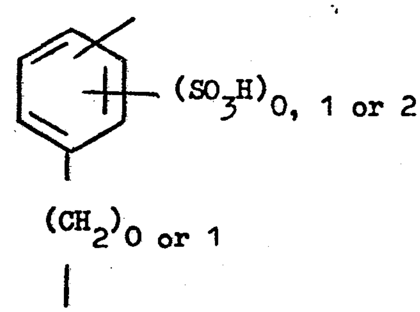

or

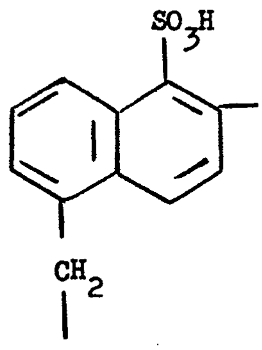

or

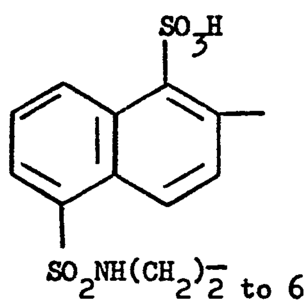

9. Reactive dyes as claimed in any one of claims 1 to 8 and having the formula:

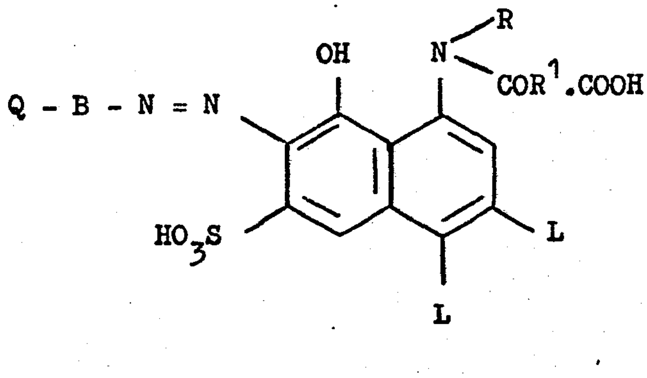

where one L is $SO_3H$ and the other is H

or

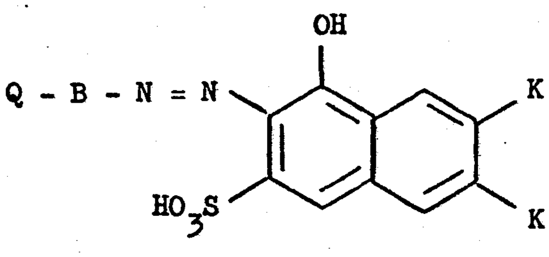

where one K is 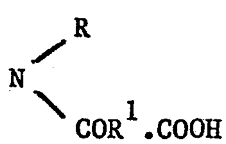 and the other is H.

RJM/BH
4.11.82.